# EUROPEAN PATENT SPECIFICATION

(11) **EP 1 124 395 B1**
(45) Date of publication and mention of the grant of the patent: **19.02.2003**
(21) Application number: 00306921.8
(22) Date of filing: 14.08.2000
(51) Int. Cl.: H04Q 7/38

(54) **Method and apparatus for automatically re-establishing a call in a communication system**
Verfahren und Vorrichtung zum automatischen Ruf-wiederherstellen in einem Kommunikationssystem
Méthode et appareil pour rétablir automatiquement un appel dans un système de communication

(30) Priority: 31.01.2000 US 494270
(43) Date of publication of application: 16.08.2001
(73) Proprietor: LUCENT TECHNOLOGIES INC., Murray Hill, New Jersey 07974-0636 (US)
(72) Inventor: Smith, Harold Robert, Jr., Oakbrook Terrace, Illinois 60181 (US); Zahnle, Jeffrey Arthur, Elburn, Illinois 60119 (US)
(74) Representative: Buckley, Christopher Simon Thirsk

(56) References cited:
- EP-A- 0 871 316
- WO-A-00/28764
- US-A- 5 689 548

## Description

This invention relates to methods for automatically re-establishing a call between a mobile unit and a network element, and to Mobile Switching Centers.

Calls, such as cellular calls in communication systems, are typically generated by mobile units. Such calls are placed by dialing a number and connecting to a service provider. Cellular service providers obtain information from the callers, such as identification numbers, directory numbers, and the like. Some of this information is utilized when establishing the call.

Once a call has been established, problems can occur that terminate the call. Often the termination is driven by user action, such as a mobile phone user intentionally ending the call. In certain circumstances, however, a call is terminated unintentionally. This can occur when a mobile user enters an area that does not support cellular service, enters a "bad cell", encounters interference, or any other situation in which the connection to the cellular infrastructure equipment is interrupted long enough to cause a loss of the call.

In typical communication systems, the user of the mobile unit has to re-dial the original number dialed and establish a new call on a new call path. In essence, a second, entirely different call has to occur.

There are instances when the called party would like to re-establish the communication with the calling party. One such scenario is during an emergency call. In emergency calls, a mobile unit dials an emergency number, such as 9-1-1. The call is routed through a Mobile Switching Center (MSC) to a Public Safety Answering Point (PSAP), which handles the call.

If the emergency call is unintentionally terminated, the PSAP will attempt to re-establish the call. Using traditional 9-1-1 processing, the directory number of the mobile unit will be passed to the PSAP during the setup of the emergency call. In emergency calls, it is typically the PSAP that ends calls, so any ending of a call by a mobile unit is considered to be improper in an emergency setting.

One possible approach in such scenarios is for the PSAP or MSC to establish a new call to the calling mobile unit. In this manner, the emergency communication can be re-established between the mobile unit and the PSAP.

One difficulty with such a callback approach is that it requires extra time and processing. The communication system releases the resources allocated to the first emergency call, determines the proper way to reach the mobile unit, and then re-allocates resources for the new emergency call. In emergency situations, such added time and resources can be detrimental to the mobile unit user.

A second difficulty with such a callback scenario is that some mobile units are incapable of receiving incoming calls. This can happen when a mobile unit has roamed and does not have call delivery, when the mobile unit is a non-coded mobile unit, if the mobile service is discontinued, or if no roaming relationship exists between the service provider and the mobile unit's home system. If the emergency call is terminated and the PSAP desires to re-establish the emergency call, it will try to contact the mobile unit using the directory number of the mobile unit. Since the mobile unit is not able to be contacted via its directory number, the PSAP will fail in its attempt to re-establish the emergency call.

Therefore, a need exists for a method and apparatus for automatically re-establishing a call to provide for enhanced service, especially, but not limited to, an emergency situation.

EP-A-0871316 discloses a method and apparatus for processing dropped calls. If, during an established call between two communication devices, a telecommunication network node determines that a communication link to one of the devices has been dropped, the node determines the cause of the dropped communication link and sends a status message to the non-dropped communication device. If a reconnection attempt is appropriate, the node attempts to reconnect to the dropped device. If a reconnection attempt is not appropriate, or if the reconnection attempt is unsuccessful, the non-dropped communication device is connected to a voice mail node. If the reconnection attempt is successful, the call between the two communication devices is re-established.

According to one aspect of this invention there is provided a method as claimed in claim 1.

According to another aspect of this invention there is provided a Mobile Switching Centre as claimed in claim 5.

It is an object of the present invention to provide a method and apparatus for permitting a called party to automatically re-establish a call. A wireless emergency call is one use of the invention. As used herein, the term "terminated improperly" refers to a situation when a call is ended from a device that is not anticipated to end the call. In addition, the term "terminated improperly" also refers to the situation when a call is ended by the calling party but the called party desires to continue or immediately re-establish the call. For instance, emergency calls are typically initiated by mobile units and terminated by network elements. For emergency calls, if an MSC sees a call termination from a mobile unit, this emergency call would be considered to be terminated improperly. The present invention can also be effective in cases when a call has been properly terminated but more information is desired after termination of the call.

The method and apparatus of the present invention enables a called party, such as a network element or PSAP, to automatically re-establish an emergency call with a mobile unit when the call has been terminated improperly.

The present invention provides a method for automatically re-establishing a call between a mobile unit and a network element on a call path in a communication system. If the call is terminated improperly, the present invention provides for the call to be automatically re-established, preferably on a portion of the same call path, even if the mobile unit is one that cannot be reached using its directory number. For an emergency call, this is accomplished by automatically re-establishing the call on a portion of the call path when the call is terminated by the mobile unit. The call may have terminated improperly due to the mobile unit temporally going into an area that does not provide cellular coverage, temporary loss of power, or any other situation where the link to the mobile unit is dropped, but the call was not desired to be ended by the called party. In typical emergency calls, the network element makes the decision to end the call, and it is upon communication of this decision to the MSC that the resources used for the emergency call are released.

A preferred method comprises the steps of determining that the mobile unit has disconnected from the call and automatically re-establishing the call on the call path if the mobile unit disconnected from the call. This processing is preferably done at a Mobile Switching Center (MSC) disposed between the mobile unit and the network element.

The step of automatically re-establishing the call on the call path preferably includes the steps of determining whether the network element has released the call. If the network element has released the call, the MSC will assume that the call terminated properly, and will release all resources related to the call.

To re-establish the call, the MSC sends a paging message to the mobile unit. Upon receiving a page response from a responding mobile unit, the MSC determines if the responding mobile unit is the mobile unit. If the responding mobile unit is the mobile unit, the MSC sends an alert message to the responding mobile unit. The MSC then determines if the mobile unit has responded to the alert message. If the mobile unit has responded to the alert message, the MSC re-establishes the call on the call path between the MSC and the network element. If the mobile unit does not respond to the alert message, the MSC transmits a failure message to the network element. The failure message indicates that the call could not be re-established between the mobile unit and the network element on the call path.

Thus, the present invention provides an improved method and apparatus for automatically re-establishing a call in a communication system.

### Brief Description of the Drawings

FIG. 1 depicts a communication system in accordance with the preferred embodiment of the present invention.

FIG. 2 depicts a flowchart for automatically re-establishing a call in a communication system in accordance with the preferred embodiment of the present invention.

FIG. 3 depicts a flowchart of the automatically re-establishing step for re-establishing a call in a communication system in accordance with the preferred embodiment of the present invention.

FIG. 4 depicts a Mobile Switching Center (MSC) in accordance with the preferred embodiment of the present invention.

### Description of the Preferred Embodiment(s)

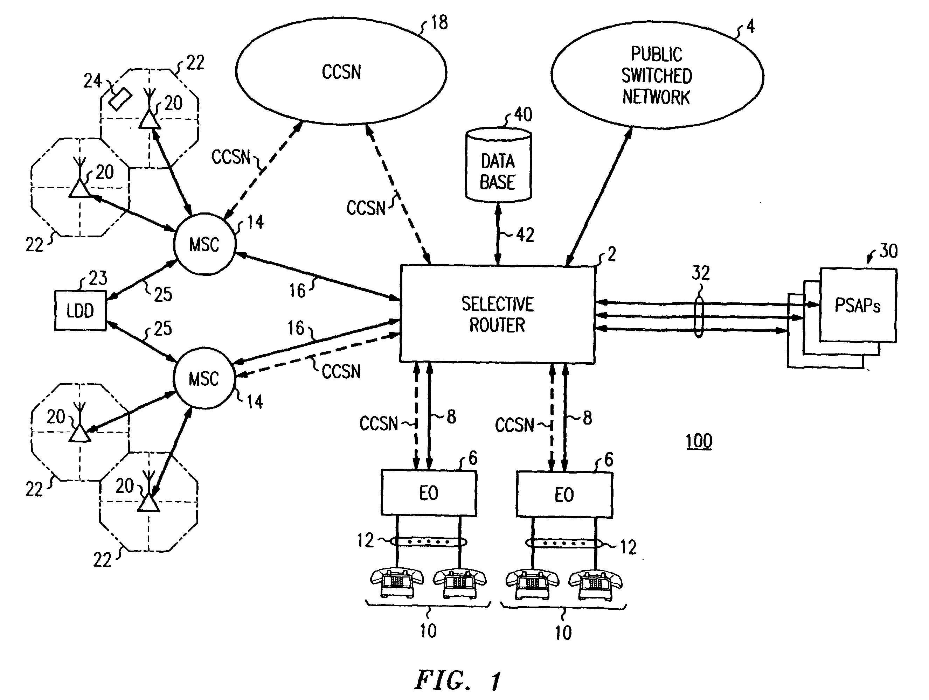

FIG. 1 depicts a communication system 100 in accordance with the preferred embodiment of the present invention. Communication system 100 comprises a switching system 2, such as the "5ESS" switching system manufactured and sold by "LUCENT TECHNOLOGIES, INC.". In the illustrated system 100, switching system 2, commonly known as a selective router, is an emergency services network element responsible for routing an incoming emergency call to an appropriate Public Safety Answering Point (PSAP) 30. Switching system 2 may also be responsible for other functions, such as redirecting calls from a primary PSAP to a secondary PSAP and can include any switch having a switch fabric capable of routing voice and data through Public Switch Telephone Network (PSTN) 4.

Selective router 2 is typically connected to one or more end offices 6 via trunks 8. End offices 6 can comprise switching systems such as the "SESS" switching system or any switch capable of routing voice and data through the network. End offices 6 preferably host Customer Premise Equipment (CPE) 10 such as telephones, personal computers, fax machines or the like over customer lines 12. Selective router 2 is also preferably connected to one or more Mobile Switching Centers (MSC) 14 over trunks 16. It will be appreciated that end offices 6 can also host MSCs. As is known in the art, MSCs 14, end offices 6 and selective routers 2, in addition to the voice and data communications channels described above, communicate with one another over an overlay Common Channel Signaling Network (CCSN) 18, preferably the SS7 network for transmitting control and signal messaging. The CCSN can connect the network elements directly using a point-to-point connection, or the connection can be made through the CCSN network as illustrated.

Each MSC 14 is preferably connected to at least one cell site 20 comprising a radio transceiver 20. Radio transceiver 20 is effective for establishing an air interface with wireless communication devices 24 located in cell 22 served by cell site 20. It is to be understood that in a typical wireless communication system, cell sites are arranged such that the cells are contiguous, thereby allowing wireless communication devices 24 to move between cells 22. In the system of the present invention, each cell is divided into sectors 22a, 22b...22n where each cell sector encompasses a predetermined geographic area of the cell.

Selective router 2 is preferably connected to a plurality of PSAPs 30 over interfaces 32. In the preferred embodiment, interfaces 32 comprise Integrated Services Digital Network (ISDN) interfaces, although analog interfaces can also be used. In the communication system of the present invention, the routing of a call is different for the two interfaces as will hereinafter be explained. Each PSAP 30 is responsible for administering emergency calls forwarded to it from selective router 2. Specifically, each PSAP 30 is responsible for serving calls that originate from a particular geographic area. The geographic areas served by PSAPs 30 are known as emergency service zones (ESZs). Selective router 2, as will hereinafter be explained, routes the call to the PSAP serving the geographic area from which the emergency call originates. The PSAP, after being connected to the calling party, serves the call by advising police, fire or other emergency personnel of the nature of the call or by taking other action as appropriate.

Communication system 100 also includes a data base 40 accessible by selective router over data link 42. As is known, data base 40 includes a correlation between ANI numbers and Emergency Service Zones (ESZs) for land line calls so that selective router 2, upon receipt of an ANI from a land line CPE 10, can identify the emergency service zone for that call and direct the call to the PSAP serving that ESZ.

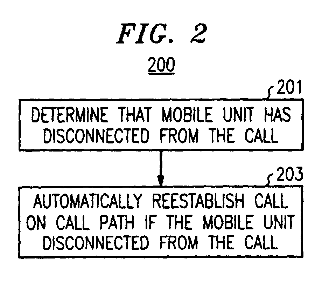

FIG. 2 depicts a flowchart 200 for automatically re-establishing a call between a mobile unit and a network element on at least a portion of a call path in a communication system in accordance with the preferred embodiment of the present invention. In the preferred embodiment, the call is an emergency call. Similar processing occurs for the alternate embodiment, when the call is a non-emergency call. A determination is made that the call between the network element and the mobile unit has terminated improperly. For instance, the mobile unit may have gone into a "dead zone", a cell area that is uncovered, thereby breaking down one of the links of the call path. Typically, the network element initiates the termination of an emergency call. If the mobile unit initiates the termination of the call, it typically means that the emergency call should not have been terminated, but rather was improperly terminated due to a circumstance such as the mobile user entering a "dead zone".

In the preferred embodiment of the present invention, the call is not broken down until the network element instructs the MSC to place all of the links it controls necessary to establish the call path back into service for other calls. The MSC preferably keeps the portion of the call path between the MSC and the network element up and does not release these resources until instructed to do so by the network element. In this manner, the present invention allows for the call to be re-established on the same call path between the MSC and the network element as the original call.

The processing depicted in FIG. 2 preferably occurs at a Mobile Switching Center (MSC), but could alternately be located at another location, or could have some steps performed at the MSC and others performed in another piece of telecommunications equipment.

In accordance with the preferred embodiment, the MSC determines (201) that the mobile unit has disconnected from the call. The MSC can make this determination by determining that radio contact has been lost between the mobile unit and the MSC. In the preferred embodiment, the call is an emergency call between a mobile unit and a network element. In an alternate embodiment of the present invention, the call is a non-emergency call. The communication system preferably includes a Mobile Switching Center (MSC) disposed between the mobile unit and the network element, and the emergency call is conducted on a call path between the mobile unit and the network element and utilizes system resources. As used herein, the term "call path" refers to the links that are necessary to facilitate a communication between the mobile unit and the network element. This path typically includes trunking from the MSC to the selective router.

The MSC automatically re-establishes (203) the call on the call path if the mobile unit disconnected from the call. In the preferred embodiment of the present invention, the MSC re-establishes the emergency call on the call path between the MSC and the network element without releasing the system resources if the mobile unit disconnected from the emergency call.

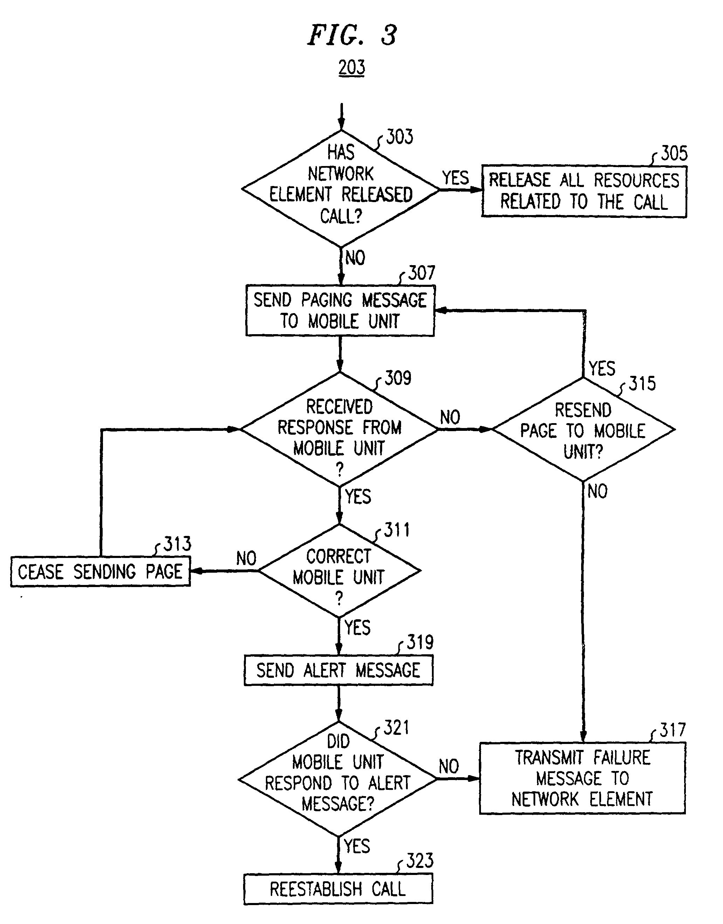

FIG. 3 depicts a flowchart of the automatically re-establishing step 203 for re-establishing a call in a communication system in accordance with the preferred embodiment of the present invention.

The MSC detects a release of the call from the network element, preferably the PSAP. The MSC then determines (303) whether the network element has released the call. If the network element has released the call, the MSC releases (305) all resources related to the call. In this case, since the network element, such as the PSAP, has released the call, the MSC knows that the call was properly ended, and will therefore release all resources relating to the call, including freeing up the resources used to establish the call path.

If the MSC determines in step 303 that the network element has not released the call, the MSC sends (307) a paging message to the mobile unit. The MSC will attempt to re-contact the mobile unit to re-establish the communication between the mobile unit and the network element on the call path.

The MSC then determines (309) whether it has received a response from a mobile unit to the paging message sent to the mobile unit. This decision is preferably made by starting a timer when the paging message is sent. If a response is received prior to the expiration of the timer, the MSC cancels the timer and proceeds. If the timer expires prior to receiving a response from the mobile unit, the MSC will proceed with the processing in step 315, described in detail below.

If the MSC has not received a response to the paging message, the MSC will determine (315) whether the paging message should be re-sent to the mobile unit. This is accomplished per local algorithm. This algorithm preferably compares a counter that indicates the number of times that the page has been sent to a value, preferably input into the system, that indicates the maximum number of times that the mobile should be paged before it is decided that the mobile unit cannot be reached. As an example, this value can be set to three, in which case the mobile unit would be paged three times before the MSC determines that it should no longer page the mobile unit. If the MSC determines that it should not page the mobile unit again, the MSC will proceed to the disconnection steps, which are described in more detail below.

If the MSC determines at step 315 that it should resend the paging message to the mobile unit, the MSC returns to step 307 and re-sends the paging message to the mobile unit.

If the MSC determines at step 315 that it should not re-send the paging message to the mobile unit, the MSC transmits (317) a failure message to the network element. The failure message indicates that the call could not be re-established between the mobile unit and the network element on the call path. This can occur when the mobile unit is powered off or runs out of power.

If the MSC has received a response from a mobile unit, the MSC then determines (311) if the responding mobile unit is the mobile unit that the MSC was attempting to reach with the paging message. This determination can be made by comparing the Electronic Serial Number (ESN) received to a stored value, or the current location to a stored location.

If the responding mobile unit is not the intended mobile unit, the MSC ceases (313) the sending of the paging message to the responding mobile unit. The MSC then returns to decision block 309 to determine if it has received a response from a mobile unit to the paging message sent.

If the responding mobile unit is the intended mobile unit, the MSC sends (319) an alert message to the responding mobile unit. The alert message is used to alert the mobile unit that it is trying to be reached, in this case by the PSAP in re-establishing the emergency call.

The MSC then determines (321) if the mobile unit responded to the alert message. If the mobile unit does not respond to the alert message, the MSC transmits (317) the failure message to the network element indicating that the call could not be re-established between the mobile unit and the network element. This could occur if the mobile unit has roamed out of coverage area, has lost power, or has suffered other malfunction that prevents it from communication with the MSC.

If the mobile unit does respond to the alert message, the MSC re-establishes (323) the call utilizing at least a portion of the original call path between the mobile unit and the network element. This portion is preferably the portion of the call path between the MSC and the network element.

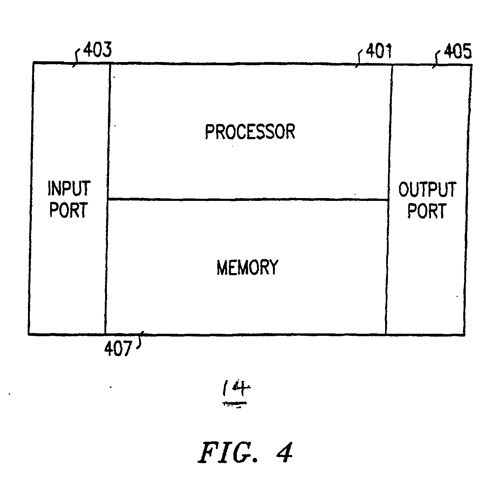

FIG. 4 depicts a Mobile Switching Center (MSC) 14 in accordance with the preferred embodiment of the present invention. MSC 14 preferably includes a processor 401, a first input port 403, an output port 405, and memory 407.

Processor 401 is effective in determining that a mobile unit has disconnected from a call on a call path between a mobile unit and a network element. Processor 401 is also effective in automatically re-establishing the call on the call path. Processor 401 is effective in releasing all resources related to the call subsequent to determining that the network element released the call.

Processor 401 performs the step of determining if the mobile unit responded to the alert message. If the mobile unit responds to the alert message, processor 401 re-establishes the emergency call between the mobile unit and the network element if it is determined that the mobile unit responded to the alert message. Processor 401 preferably starts a timer and upon expiration of the timer prior to receiving a paging response, determines whether the paging message should be resent over the output port to the mobile unit

Processor 401 is also effective in sending a paging message to the mobile unit over output port 405. Output port 405 is preferably an Ethernet connection running TCP/IP. Processor 401 sends an alert message over output port 405 to the responding mobile unit if the responding mobile unit is the mobile unit. If the mobile unit has not responded to the alert message, processor 401 transmits over output port 405 a failure message to the network element indicating that the emergency call could not be re-established on the call path between the mobile unit and the network element.

Processor 401 ceases sending the paging message on output port 405 to the responding mobile unit if the responding mobile unit is not the mobile unit. Processor 401 also resends the paging message to the mobile unit on output port 405. Processor 401 also transmits a failure message on output port 405 indicating that the call could not be re-established on the call path between the mobile unit and the network element to the network element. This is done in response to a determination by processor 401 not to resend the paging message to the mobile unit.

Input port 403 is effective in receiving an indication that the network element has released the call. Input port 403 is preferably an Ethernet connection running TCP/IP (Transmission Control Protocol/Internet Protocol). It should be understood that MSC 14 can include a plurality of input ports, but only one is shown for clarity. Input port 403 is also effective in receiving a page response from a responding mobile unit and sending this message to processor 401, which determines if the responding mobile unit is the mobile unit.

MSC 14 also includes memory 407 for storing any data or parameters relating to the mobile unit or the call path. Such examples of mobile unit data include the ESN, location, directory number, or any other value that assists the MSC in automatically re-establishing the call. This facilitates the re-establishment of the call on the original call path.

Thus, the present invention provides a method and apparatus that solves a problem associated with the prior art. The preferred embodiment of the present invention provides a method for automatically re-establishing a call, such as an emergency call, in a communication system. The call is preferably re-established on a portion of the same call path as the original call. By holding the call path resources until the network element has released them, the need for the user of the mobile unit to re-dial phone numbers has been eliminated. This can provide enhanced, potentially life-saving service to communication systems.

In addition, the time required to re-establish a call path by reacquiring system resources to establish a second call path has been eliminated, since the MSC keeps the resources for the call path reserved until released by the network element.

It should be understood that the present invention works for emergency and non-emergency calls. For instance, a non-emergency call can be marked as a call that is not to be released until instructed to do so by the network element. A further feature would allow certain called numbers, such as suicide-prevention lines, hospitals, police stations or the like, to keep the resources of the call path reserved until released by the called number. This would enhance public safety by allowing the called parties to more easily and readily maintain communication with those in need of services.

A further embodiment of the present invention can restore premature terminations for packet-based calls. One example of such a call is a voice call that is disconnected due to a packet or path failure when the caller is not at their preprogrammed Internet Protocol (IP) address. For example, a user of an IP connection, such as on the Internet, could be engaged in a call to a sales or customer service representative. If the call is terminated prematurely, the called party could automatically re-establish the call with the calling party. This would be beneficial where the called party would like to continue the conversation, and the calling party is not at their preprogrammed IP address.

In such an embodiment, the calling party establishes the call, preferably by connecting to a Packet Data Gateway (PDG). The PDG routes packets to and from the calling party and the called party. If the call is terminated, the called party sends a message to the PDG indicating that it would like to re-establish the call. The PDG would then re-establish the call prior to releasing any resources used in the original call. The call is re-established, preferably by alerting the calling party, and then re-establishing the call when the calling party responds to the alert message.

While this invention has been described in terms of certain examples thereof, it is not intended that it be limited to the above description, but rather only to the extent set forth in the claims that follow.

## Claims

1. A method for automatically re-establishing a call between a mobile unit (24) and a network element (2) in a communication system, the communication system comprising a Mobile Switching Center (MSC, 14) disposed between the mobile unit and the network element, on at least a portion of a call path between the mobile unit (24) and the network element (2) used during a prior call, the method comprising the steps of:
determining in the MSC (14) that the mobile unit (24) has disconnected from the call;
sending a paging message from the MSC (14) to the mobile unit (24);
receiving a page response at the MSC (14) from a responding mobile unit (24);
determining in the MSC (14) if the responding mobile unit is the mobile unit (24);
sending an alert message from the MSC (14) to the responding mobile unit (24) if the responding mobile unit is the mobile unit (24);
determining in the MSC (14) if the mobile unit (24) responded to the alert message:
re-establishing the call on the call path between the MSC (14) and the network element (2) if it is determined that the mobile unit (14) responded to the alert message; and
if it is determined that the mobile unit has not responded to the alert message, transmitting a failure message from the MSC (14) to the network element (2), the failure message indicating that the call could not be re-established between the mobile unit (24) and the network element (2).

2. A method in accordance with claim 1, comprising the step of determining whether the network element has released the call.

3. A method in accordance with claim 1, comprising the step of ceasing the sending of the paging message to the responding mobile unit if the responding mobile unit is not the mobile unit (24).

4. A method in accordance with claim 1, comprising the steps of:
starting a timer;
upon expiration of the timer prior to receiving a paging response, determining whether the paging message should be resent to the mobile unit (24);
if it is determined to resend the paging message to the mobile unit (24) associated with the identification number, resending the paging message to the mobile unit (24); and
if it is determined not to resend the paging message to the mobile unit (24) associated with the identification number, transmitting a failure message to the network element, the failure message indicating that the call could not be re-established between the mobile unit (24) and the network element on the call path.

5. A Mobile Switching Center (MSC) (14) comprising
a processor (401);
an output port (405); and
an input port (403);
wherein the processor is adapted to:
determine that a mobile unit (24) has disconnected from a call on a call path between a mobile unit (24) and a network element (2);
send a paging message to the mobile unit (24) over the output port (405);
receive a page response from a responding mobile unit over the input port (403);
determine if the responding mobile unit is the mobile unit (24);
send an alert message to the responding mobile unit (24) if the responding mobile unit is the mobile unit (24);
determine if the mobile unit (24) responded to the alert message;
re-establish the call between the mobile unit (24) and the network element (2) if it is determined that the mobile unit (24) responded to the alert message; and
transmit, if it is determined that the mobile unit (24) has not responded to the alert message, a failure message to the network element (2), the failure message indicating that the call could not be re-established on the call path between the mobile unit (24) and the network element (2).

6. A Mobile Switching Center (MSC) (14) in accordance with claim 5, wherein the input port (403) is adapted to receive an indication that the network element has released the call.

7. A Mobile Switching Center (MSC) (14) in accordance with claim 5, wherein the processor (401) is adapted to cease the sending of the paging message to the responding mobile unit if the responding mobile unit is not the mobile unit.

8. A Mobile Switching Center (MSC) (14) in accordance with claim 5, wherein the processor (401) is adapted to:
start a timer;
upon expiration of the timer prior to receiving a paging response, determine whether the paging message should be resent over the output port to the mobile unit:
resend the paging message to the mobile unit if it is determined to resend the paging message to the mobile unit; and
transmit, if it is determined not to resend the paging message to the mobile unit. a failure message to the network element over the output port (405), the failure message indicating that the call could not be re-established on the call path between the mobile unit and the network element.

## Patentansprüche

1. Verfahren zum automatischen Wiederherstellen einer Verbindung zwischen einer mobilen Einheit (24) und einem Netzelement (2) in einem Kommunikationssystem, wobei das Kommunikationssystem eine Mobilvermittlungsstelle ("Mobile Switching Center" - MSC, 14) umfasst, die zwischen der mobilen Einheit und dem Netzelement angeordnet ist, auf wenigstens einem Abschnitt eines Verbindungspfades zwischen der mobilen Einheit (24) und dem Netzelement (2), der während einer früheren Verbindung verwendet wurde, wobei das Verfahren die folgenden Schritte umfasst:
Bestimmen in der MSC (14), dass die mobile Einheit (24) von der Verbindung getrennt wurde;
Senden einer Funkrufnachricht von der MSC (14) zu der mobilen Einheit (24);
Empfangen einer Funkrufantwort an der MSC (14) von einer antwortenden mobilen Einheit (24);
Bestimmen in der MSC (14), ob die antwortende mobile Einheit die mobile Einheit (24) ist;
Senden einer Warnnachricht von der MSC (14) zu der antwortenden mobilen Einheit (24), wenn die antwortende mobile Einheit die mobile Einheit (24) ist;
Bestimmen in der MSC (14), ob die mobile Einheit (24) auf die Warnnachricht geantwortet hat;
Wiederherstellen der Verbindung auf dem Verbindungspfad zwischen der MSC (14) und dem Netzelement (2), wenn bestimmt wird, dass die mobile Einheit (24) auf die Warnnachricht geantwortet hat; und
wenn bestimmt wird, dass die mobile Einheit nicht auf die Warnnachricht geantwortet hat, Senden einer Störungsnachricht von der MSC (14) zu dem Netzelement (2), wobei die Störungsnachricht anzeigt, dass die Verbindung zwischen der mobilen Einheit (24) und dem Netzelement (2) nicht wiederhergestellt werden konnte.

2. Verfahren nach Anspruch 1, umfassend den Schritt des Bestimmens, ob das Netzelement die Verbindung freigegeben hat.

3. Verfahren nach Anspruch 1, umfassend den Schritt des Beendens des Sendens der Funkrufnachricht zu der antwortenden mobilen Einheit, wenn die antwortende mobile Einheit nicht die mobile Einheit (24) ist.

4. Verfahren nach Anspruch 1, umfassend die folgenden Schritte:
Starten eines Zeitgebers;
bei Ablauf des Zeitgebers vor dem Empfangen einer Funkrufantwort, Bestimmen, ob die Funkrufnachricht erneut zu der mobilen Einheit (24) gesendet werden soll;
wenn bestimmt wird, die Funkrufnachricht erneut zu der mobilen Einheit (24) zu senden, die der Kennzahl zugeordnet ist, erneutes Senden der Funkrufnachricht zu der mobilen Einheit (24); und
wenn bestimmt wird, die Funkrufnachricht nicht erneut zu der mobilen Einheit (24) zu senden, die der Kennzahl zugeordnet ist, Senden einer Störungsnachricht zu dem Netzelement, wobei die Störungsnachricht anzeigt, dass die Verbindung auf dem Verbindungspfad zwischen der mobilen Einheit (24) und dem Netzelement nicht wiederhergestellt werden konnte.

5. Mobilvermittlungsstelle ("Mobile Switching Center" - MSC) (14), umfassend
einen Prozessor (401);
einen Ausgangsport (405); und
einen Eingangsport (403);
wobei der Prozessor ausgelegt ist für das:
Bestimmen, dass eine mobile Einheit (24) von einer Verbindung auf einem Verbindungspfad zwischen einer mobilen Einheit (24) und einem Netzelement (2) getrennt wurde;
Senden einer Funkrufnachricht zu der mobilen Einheit (24) über den Ausgangsport (405);
Empfangen einer Funkrufantwort von einer antwortenden mobilen Einheit über den Eingangsport (403);
Bestimmen, ob die antwortende mobile Einheit die mobile Einheit (24) ist;
Senden einer Warnnachricht zu der antwortenden mobilen Einheit (24), wenn die antwortende mobile Einheit die mobile Einheit (24) ist;
Bestimmen, ob die mobile Einheit (24) auf die Warnnachricht geantwortet hat;
Wiederherstellen der Verbindung zwischen der mobilen Einheit (24) und dem Netzelement (2), wenn bestimmt wird, dass die mobile Einheit (24) auf die Warnnachricht geantwortet hat; und
wenn bestimmt wird, dass die mobile Einheit (24) nicht auf die Warnnachricht geantwortet hat, Senden einer Störungsnachricht zu dem Netzelement (2), wobei die Störungsnachricht anzeigt, dass die Verbindung auf dem Verbindungspfad zwischen der mobilen Einheit (24) und dem Netzelement (2) nicht wiederhergestellt werden konnte.

6. Mobilvermittlungsstelle (MSC) (14) nach Anspruch 5, wobei der Eingangsport (403) dazu ausgelegt ist, eine Anzeige zu empfangen, dass das Netzelement die Verbindung freigegeben hat.

7. Mobilvermittlungsstelle (MSC) (14) nach Anspruch 5, wobei der Prozessor (401) dazu ausgelegt ist, das Senden der Funkrufnachricht zu der antwortenden mobilen Einheit zu beenden, wenn die antwortende mobile Einheit nicht die mobile Einheit ist.

8. Mobilvermittlungsstelle (MSC) (14) nach Anspruch 5, wobei der Prozessor (401) ausgelegt ist zum:
Starten eines Zeitgebers;
bei Ablauf des Zeitgebers vor dem Empfangen einer Funkrufantwort, Bestimmen, ob die Funkrufnachricht erneut über den Ausgangsport zu der mobilen Einheit gesendet werden soll;
erneuten Senden der Funkrufnachricht zu der mobilen Einheit, wenn bestimmt wird, die Funkrufnachricht erneut zu der mobilen Einheit zu senden; und
wenn bestimmt wird, die Funkrufnachricht nicht erneut zu der mobilen Einheit zu senden, Senden einer Störungsnachricht zu dem Netzelement über den Ausgangsport (405), wobei die Störungsnachricht anzeigt, dass die Verbindung auf dem Verbindungspfad zwischen der mobilen Einheit und dem Netzelement nicht wiederhergestellt werden konnte.

## Revendications

1. Procédé de rétablissement automatique d'un appel entre une unité mobile (24) et un élément de réseau (2) dans un système de communication, le système de communication comprenant un Centre de Commutation mobile (MSC, 14) disposé entre l'unité mobile et l'élément de réseau, sur au moins une partie d'un trajet d'appel entre l'unité mobile (24) et l'élément de réseau (2) utilisé durant un appel antérieur, le procédé comprenant les étapes de :
détermination dans le MSC (14) que l'unité mobile (24) s'est déconnectée de l'appel ;
envoi d'un message de recherche depuis le MSC (14) à l'unité mobile (24) ;
réception d'une réponse à la recherche au niveau du MSC (14) à partir d'une unité mobile répondeuse (24) ;
détermination dans le MSC (14) si l'unité mobile répondeuse est l'unité mobile (24) ;
envoi d'un message d'alerte à partir du MSC (14) à l'unité mobile répondeuse (24) si l'unité mobile répondeuse est l'unité mobile (24) ;
détermination dans le MSC (14) si l'unité mobile (24) a répondu au message d'alerte ;
rétablissement de l'appel sur le trajet d'appel entre le MSC (14) et l'élément de réseau (2) s'il est déterminé que l'unité mobile (24) a répondu au message d'alerte ; et
s'il est déterminé que l'unité mobile n'a pas répondu au message d'alerte, transmission d'un message de défaillance depuis le MSC (14) à l'élément de réseau (2), le message de défaillance indiquant que l'appel n'a pas pu être rétabli entre l'unité mobile (24) et l'élément de réseau (2).

2. Procédé selon la revendication 1, comprenant l'étape de détermination si l'élément de réseau a libéré l'appel.

3. Procédé selon la revendication 1, comprenant l'étape de cession de l'envoi du message de recherche à l'unité mobile répondeuse si l'unité mobile répondeuse n'est pas l'unité mobile (24).

4. Procédé selon la revendication 1, comprenant les étapes de :
mise en marche d'une temporisation ;
à l'arrivée à terme de la temporisation avant de recevoir une réponse à la recherche, détermination si le message de recherche doit être envoyé à nouveau à l'unité mobile (24) ;
s'il est déterminé qu'il faut envoyer à nouveau le message de recherche à l'unité mobile (24) associée au numéro d'identification, envoi à nouveau du message de recherche à l'unité mobile (24) ; et
s'il est déterminé qu'il ne faut pas envoyer à nouveau le message de recherche à l'unité mobile (24) associée au numéro d'identification, transmission d'un message de défaillance à l'élément de réseau, le message de défaillance indiquant que l'appel n'a pas pu être rétabli entre l'unité mobile (24) et l'élément de réseau sur le trajet d'appel.

5. Centre de Commutation mobile (MSC) (14) comprenant
un processeur (401) ;
un port de sortie (405) ; et
un port d'entrée (403) ;
dans lequel le processeur est adapté pour :
déterminer qu'une unité mobile (24) s'est déconnectée d'un appel sur un trajet d'appel entre une unité mobile (24) et un élément de réseau (2) ;
envoyer un message de recherche à l'unité mobile (24) sur le port de sortie (405) ;
recevoir une réponse à la recherche depuis une unité mobile répondeuse sur le port d'entrée (403) ;
déterminer si l'unité mobile répondeuse est l'unité mobile (24) ;
envoyer un message d'alerte à l'unité mobile répondeuse (24) si l'unité mobile répondeuse est l'unité mobile (24) ;
déterminer si l'unité mobile (24) a répondu au message d'alerte ;
rétablir l'appel entre l'unité mobile (24) et l'élément de réseau (2) s'il est déterminé que l'unité mobile (24) a répondu au message d'alerte ; et
transmettre, s'il est déterminé que l'unité mobile (24) n'a pas répondu au message d'alerte, un message de défaillance à l'élément de réseau (2), le message de défaillance indiquant que l'appel n'a pas pu être rétabli entre l'unité mobile (24) et l'élément de réseau (2).

6. Centre de Commutation mobile (MSC) (14) selon la revendication 5, dans lequel le port d'entrée (403) est adapté pour recevoir une indication que l'élément de réseau a libéré l'appel.

7. Centre de Commutation mobile (MSC) (14) selon la revendication 5, dans lequel le processeur (401) est adapté pour cesser l'envoi du message de recherche à l'unité mobile répondeuse si l'unité mobile répondeuse n'est pas l'unité mobile.

8. Centre de Commutation mobile (MSC) (14) selon la revendication 5, dans lequel le processeur est adapté pour :
mettre en marche une temporisation ;
à l'arrivée à terme de la temporisation avant de recevoir une réponse à la recherche, déterminer si le message de recherche doit être envoyé à nouveau sur le port de sortie à l'unité mobile ;
envoyer à nouveau le message de recherche à l'unité mobile s'il est déterminé qu'il faut envoyer à nouveau le message de recherche à l'unité mobile ; et
transmettre, s'il est déterminé qu'il ne faut pas envoyer à nouveau le message de recherche à l'unité mobile, d'un message de défaillance à l'élément de réseau sur le port de sortie (405), le message de défaillance indiquant que l'appel n'a pas pu être rétabli sur le trajet d'appel entre l'unité mobile et l'élément de réseau.
